# EUROPÄISCHE PATENTSCHRIFT

(11) **EP 1 754 870 B1**
(45) Veröffentlichungstag und Bekanntmachung des Hinweises auf die Patenterteilung: **22.05.2013**
(21) Anmeldenummer: 06014993.7
(22) Anmeldetag: 19.07.2006
(51) Int. Cl.: F02B 37/02, F02B 37/00, F02B 37/013, F02B 37/007, F02B 37/18, F01N 3/08, F01N 3/20

(54) **Brennkraftmaschine mit Abgasturboaufladung**
Turbocharged combustion engine
Moteur à combustion turbocompressé

(30) Priorität: 18.08.2005 DE 102005039012
(43) Veröffentlichungstag der Anmeldung: 21.02.2007
(73) Patentinhaber: Volkswagen Aktiengesellschaft, 38440 Wolfsburg (DE)
(72) Erfinder: Pott, Ekkehard, 38518 Gifhorn (DE); Theobald, Jörg, 38165 Lehre (DE); Hagelstein, Dirk, 38110 Braunschweig (DE)

(56) Entgegenhaltungen:
- WO-A-2004/097195
- DE-A1- 10 243 473
- JP-A- 61 164 039

## Beschreibung

Die Erfindung bezieht sich auf eine Brennkraftmaschine mit Abgasturboaufladung nach dem Oberbegriff des Anspruchs 1.

Derartige Brennkraftmaschinen, auch Turbomotoren genannt, weisen prinzipbedingt eine Drehmomentschwäche im unteren Drehzahlbereich auf, da die Abgasenthalpie im leerlaufnahen Bereich nicht ausreicht, um den Turbolader auf die für den benötigten Ladedruck erforderlichen Drehzahlen zu beschleunigen. Eine derartige Drehmomentschwäche im unteren Drehzahlbereich wird üblicherweise "Turboloch" bezeichnet. Bei Brennkraftmaschinen mit vier bzw. sechs und mehr Zylindern werden zunehmend mehrere Turbolader verwendet. Bei der konventionellen BiTurbo-Anordnung werden zwei Abgasturbolader gleicher Baugröße parallel geschaltet. Diese werden gleichmäßig mit Abgas beaufschlagt, und es wird angestrebt, dass die Abgasturbolader synchron hoch laufen. Der Vorteil dieser Anordnung gegenüber einer Monoturbo-Anordnung besteht darin, dass das Massenträgheitsmoment der zwei Abgasturbolader wesentlich geringer ist als dasjenige eines großen Abgasturboladers. Der Laufraddurchmesser geht nämlich in der 5. Potenz in das Massenträgheitsmoment ein. Nachteilig ist dabei allerdings, dass der stationäre Drehmomentverlauf nach wie vor ein vergleichbares Turboloch aufweist. Da der Abgasmassenstrom auf die beiden Abgasturbolader aufgeteilt wird, erhält jede Turbine lediglich den halben Abgasmassenstrom. Somit kann im stationären Drehmoment kein nennenswerter Vorteil gegenüber einer Anordnung mit einem einzigen Abgasturbolader erzielt werden.

Aus der Praxis ist eine Stufenaufladung bekannt, welche diesen Nachteil umgeht. Dabei ist allerdings eine motornahe Abgasklappe erforderlich, die thermisch extrem hoch belastet ist. Außerdem muss im Nennleistungsbereich allein der Niederdruck-Abgasturbolader den Ladeluftmassenstrom bereit stellen. Dies führt bei Motoren mit sechs und mehr Zylindern zu sehr großen Abgasturboladern, die vom Raumbedarf her äußerst problematisch sind. Nachteilig speziell für Ottomotoren ist ferner die große thermische Trägheit des Abgassystems, welche die Einhaltung strenger Emissionsvorschriften erschwert.

Eine Brennkraftmaschine der eingangs erwähnten Art ist beispielsweise aus der DE 102 43 473 A1 bekannt. Wenn bei dieser Brennkraftmaschine die zweiten Auslassventile aktiviert werden, dann ist die Turbine des ersten Abgasturboladers über die Zylinder kurzgeschlossen. Somit liegt an der Turbine des zweiten Abgasturboladers schlagartig nur noch ein Druckverhältnis von "1" an, und die Turbine des zweiten Abgasturboladers kann keine Leistung mehr abgeben. Da die Abgasturbolader im unteren Drehzahlbereich in Reihe geschaltet sind, muss auch der erste Abgasturbolader eine gewisse Mindestgröße haben, um den Abgasgegendruck durch die Multiplikation der beiden Turbinendruckverhältnisse nicht zu sehr ansteigen zu lassen. Dies ist durch die Klopfbegrenzung des Ottomotors zwingend erforderlich. Nachteilig ist dabei, dass eine konsequent auf einen gleichmäßigen Drehmomentaufbau ausgelegte Abgasturbolader-Kombination nicht möglich ist. Mit der bekannten Brennkraftmaschine ist entweder ein momentneutrales Zuschalten des zweiten Abgasturboladers oder aber ein extrem früher Drehmomentaufbau nicht gegeben.

Eine gattungsgemäße Brennkraftmaschine ist aus der JP 61 164039 A bekannt. Hierbei soll bei einer Brennkraftmaschine mit zweistufiger Aufladung eine in den Arbeitszylindern verbleibende Restgasmenge dadurch reduziert werden, dass das Abgas aus zwei Auslassventilen eines jeden Arbeitszylinders in unterschiedliche Abgasfluten geleitet wird, wobei das Abgas aus ersten Auslassventilen einem ersten Abgasturbolader einer Hochdruckstufe und das Abgas aus den zweiten Auslassventilen einem zweiten Abgasturbolader einer Niederdruckstuffe zugeführt wird. Die beiden Auslassventile jeweils eines Arbeitszylinders werden zeitversetzt geöffnet, wobei die ersten Auslassventile unmittelbar am Beginn eines jeweiligen Ladungswechseltaktes geöffnet werden und die zweiten Auslassventile erst später geöffnet werden, wenn der Druck in dem jeweiligen Arbeitszylinder während des Ladungswechseltaktes bereits abgefallen ist.

Der Erfindung liegt die Aufgabe zugrunde, eine Brennkraftmaschine der eingangs erwähnten Art zu schaffen, bei der die Abgasturboaufladung weiter verbessert ist.

Diese Aufgabe wird erfindungsgemäß durch eine Brennkraftmaschine mit den Merkmalen des Anspruchs 1 gelöst.

Vorteilhafte Weiterbildungen sind Gegenstand der Unteransprüche.

Zur Lösung der o.g. Aufgabe ist es erfindungsgemäß vorgesehen, dass die zumindest zwei Auslassventile unabhängig voneinander steuerbar ausgebildet sind, wobei ein Vorkatalysator stromaufwärts, vorzugsweise aber stromabwärts des ersten Abgasturboladers angeordnet und mit zumindest einer stromaufwärts des Vorkatalysators vorgesehenen Lambdasonde regelbar ist, wobei vorzugsweise eine weitere Lambdasonde stromabwärts des Vorkatalysators und stromaufwärts eines nachfolgenden Hauptkatalysators angeordnet ist, und wobei die wenigstens eine Bypassleitung des ersten Abgasturboladers auch den Vorkatalysator umgeht. Damit ist ein besonders vorteilhafter, nämlich gleichmäßiger bzw. allmählicher Übergang im Ladedruckaufbau und damit im Drehmomentaufbau gewährleistet. Es ist möglich, die wenigstens eine Bypassleitung sukzessive zu öffnen und dadurch den Abgasmassenstrom von den wenigstens einen der Auslassventile, d.h. bei geschlossenen weiteren Auslassventilen, auf beide Abgasturbolader aufzuteilen. Dadurch ist der zweite Abgasturbolader vor dem Öffnen der weiteren Auslassventile zunehmend am Ladedruckaufbau beteiligt, so dass ein Öffnen der weiteren Auslassventile nicht die zuvor in Bezug auf den nächstkommenden Stand der Technik beschriebenen, nachteiligen Auswirkungen auf den Drehmomentverlauf haben kann. Vorteilhaft ist dabei ferner, dass die erfindungsgemäße Abgasturboaufladung mit Ausnahme der Schaltung für die vorerwähnte wenigstens eine Bypassleitung ohne bewegliche Teile in der Abgasanlage auskommen kann. Da das gesamte Abgas über den ersten Abgasturbolader geleitet werden kann, erreicht der dem ersten Abgasturbolader vorzugsweise nach geordnete Vorkatalysator schnell die zur Umsetzung erforderliche Betriebstemperatur. Auch in der Heizphase des Katalysators nach einem Kaltstart ist eine solche Schaltung so lange beizubehalten, bis der Hauptkatalysator eine vorbestimmte Mindesttemperatur von beispielsweise 300°C überschritten hat. Dadurch, dass die wenigstens eine Bypassleitung des ersten Abgasturboladers auch den Vorkatalysator umgeht, kann das Abgas möglichst ungehindert, d.h. auf einem nahezu unverminderten Energieniveau, den zweiten Abgasturbolader erreichen, so dass letzterer effektiver in der Lage ist, die Energie des Abgases zu einer Vorverdichtung der Ladeluft zu verwenden.

Gemäß einer Weiterbildung der Erfindung ist die wenigstens eine Bypassleitung des ersten Abgasturboladers derart dimensioniert, dass das Turbinendruckverhältnis am ersten Abgasturbolader bis nahe an den Wert "1" absenkbar ist, wobei vorzugsweise die Drehzahl des zweiten Abgasturboladers dann bereits so hoch ist, dass letzterer den gewünschten Ladedruck allein erreicht. Dadurch kann ein besonders gleichmäßiger und schonender Übergang im Ladedruckaufbau und somit auch im Drehmomentaufbau erreicht werden. Stationär und dynamisch kann dadurch ein harmonischer Übergang vom Betrieb des ersten Abgasturboladers auf den Betrieb des zweiten Abgasturboladers unter allen Betriebsbedingungen möglich sein. Außerdem kann das stationäre und dynamische Drehmoment vom ersten Abgasturbolader her so früh wie möglich anliegen.

Gemäß einer bevorzugten Weiterbildung der Erfindung ist die Betätigung der zumindest zwei Auslassventile pro Zylinder zweistufig schaltbar ausgeführt, wobei vorzugsweise die Betätigung des wenigstens einen der Auslassventile jeweils zwischen einem Vollhub und einer gegenüber dem Vollhub in der Steuerzeit und optional dem Hub reduzierten Ventilerhebungskurve und die Betätigung des wenigstens einen weiteren der Auslassventile jeweils zwischen einer vollständigen Abschaltung und einem Vollhub schaltbar ist. Damit lässt sich die Steuerung der zumindest zwei Auslassventile pro Zylinder weiter optimieren.

Gemäß einer anderen Weiterbildung der Erfindung sind die beiden Abgasturbolader gleich groß dimensioniert, vorzugsweise aber ist der erste Abgasturbolader deutlich kleiner als der zweite Abgasturbolader ausgelegt. Damit kann vermieden werden, dass sich bei einstufiger Aufladung vermehrt eine unerwünschte Drehmomentschwäche im unteren Drehzahlbereich, nämlich ein so genanntes Turboloch, ergibt. Mit Hilfe des möglichst kleinen ersten Turboladers lässt sich eine günstige Durchflusscharakteristik durch den Abgasturbolader und ein geringes Massenträgheitsmoment erreichen.

Gemäß einer anderen Weiterbildung der Erfindung weisen die Abgasturbolader jeweils eine Turbine, vorzugsweise jeweils eine so genannte Mixed-Flow-Turbine oder eine so genannte Twin-Scroll-Turbine für den ersten Abgasturbolader oder Turbinen mit variabler Turbinengeometrie, auch in Kombination miteinander, und jeweils einen Verdichter auf, wobei die beiden Verdichter in Reihe geschaltet sind. Mit Hilfe der genannten Turbinen lassen sich sehr günstige Massenträgheitsmomente bei vorgegebener Schluckfähigkeit und damit eine gute Gesamtdynamik erreichen. Mit Hilfe der vorgenannten Twin-Scroll-Turbine kann eine gegenseitige Beeinflussung der Ladungswechselvorgänge weitgehend vermieden werden. Insgesamt gesehen können bei dieser Weiterbildung in dynamischer Hinsicht besonders günstige Varianten zum Einsatz kommen.

Vorteilhafterweise fördern die Verdichter der Abgasturbolader die Luft über einen gemeinsamen, stromabwärts des Verdichters des ersten Abgasturboladers angeordneten Ladeluftkühler in ein gemeinsames Saugrohr, wobei vorzugsweise ein weiterer Ladeluftkühler zwischen den Verdichter des zweiten und den Verdichter des ersten Abgasturboladers geschaltet ist. Damit lässt sich eine zusätzliche Zwischenkühlung durchführen, welche für die Optimierung der erfindungsgemäßen Brennkraftmaschine günstig sein kann.

Gemäß einer vorteilhaften Weiterbildung weist der Vorlauf des zweiten Abgasturboladers zwei Abgasführungen mit vorzugsweise weitgehender Flutentrennung auf. Damit ist eine gegenseitige, nachteilige Beeinflussung der einzelnen Abgasströme wirksam verhindert. Dies kann mit zu einer weiteren Optimierung der Abgasturboaufladung beitragen.

Vorzugsweise ist der erste Abgasturbolader kleiner dimensioniert als der zweite Abgasturbolader und ist als Hockdruckturbine (HDT) vor der vorzugsweise baulich größeren Niederdruckturbine (NDT) angeordnet.

Ausführungsbeispiele des Erfindungsgegenstandes werden nachfolgend anhand der Zeichnung näher erläutert, wobei alle beschriebenen und/oder bildlich dargestellten Merkmale für sich oder in beliebiger Kombination den Gegenstand der vorliegenden Erfindung unabhängig von ihrer Zusammenfassung in den Ansprüchen oder deren Rückbeziehung bilden. Es zeigen:
- Fig. 1: eine schematische Darstellung einer Brennkraftmaschine mit Abgasturboaufladung;
- Fig. 2: ein Schaubild zur Veranschaulichung verschiedener Schaltstellungen eines ersten Auslassventils;
- Fig. 3: ein Schaubild zur Veranschaulichung verschiedener Schaltstellungen eines weiteren Auslassventils; und
- Fig. 4: ein Schaubild betreffend mögliche Ventilhübe und Steuerzeiten des ersten Auslassventils.

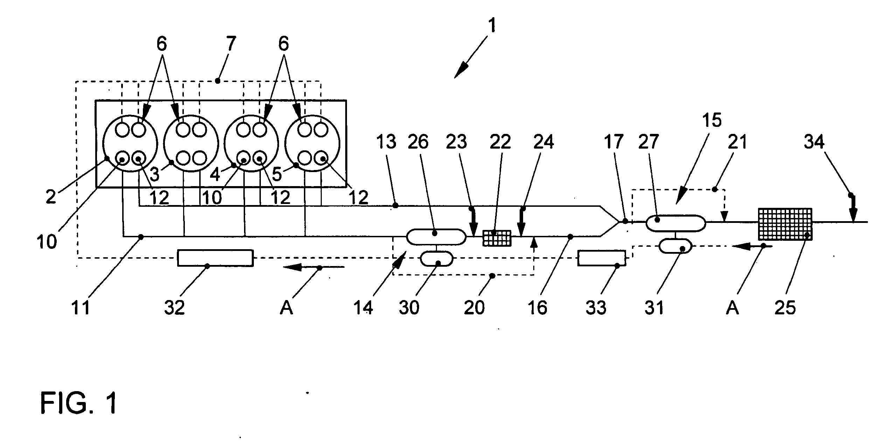

Eine Brennkraftmaschine 1 mit Abgasturboaufladung ist schematisch in Fig. 1 gezeigt.

Die in Fig. 1 dargestellte Brennkraftmaschine 1 hat gemäß der gezeigten Ausführungsform vier Zylinder 2 bis 5, deren Einlassventile 6 mit einem gestrichelt dargestellten Saugrohr 7 und deren erste Auslassventile 10 mit einer ersten Abgasleitung 11 und deren zweite Auslassventile 12 mit einer zweiten Abgasleitung 13 verbunden sind. Gemäß der dargestellten Ausführungsform hat jeder Zylinder 2 bis 5 zwei Einlassventile 6 und zwei Auslassventile 10, 12, wobei die Brennkraftmaschine 1 pro Zylinder 2 bis 5 zumindest zwei unabhängig voneinander steuerbare Auslassventile 10, 12 aufweist.

Wenigstens eines dieser Auslassventile, in dem gezeigten Ausführungsbeispiel ist dies das erste Auslassventil 10, ist jeweils ausschließlich über die erste Abgasleitung 11 mit einem ersten Abgasturbolader 14 und wenigstens ein weiteres dieser Auslassventile, in dem gezeigten Ausführungsbeispiel ist dies das zweite Auslassventil 12, ist jeweils ausschließlich über die zweite Abgasleitung 13 mit einem zweiten Abgasturbolader 15 verbunden. Ferner ist der Gasausgang 16 des ersten Abgasturboladers 14 an den Vorlauf 17 des zweiten Abgasturboladers 15 angeschlossen, wie dies in Fig. 1 gezeigt ist.

Erfindungsgemäß weist zumindest der erste Abgasturbolader 14 wenigstens eine Bypassleitung 20 auf. In dem in Fig. 1 gezeigten Ausführungsbeispiel hat der erste Abgasturbolader 14 eine Bypassleitung 20, welche punktiert dargestellt ist. Gemäß dem gezeigten Ausführungsbeispiel weist auch der zweite Abgasturbolader 15 eine ebenfalls punktiert dargestellte Bypassleitung 21 auf.

Die wenigstens eine Bypassleitung 20 des ersten Abgasturboladers 14 ist derart dimensioniert, dass das Turbinendruckverhältnis am ersten Abgasturbolader 14 bis nahe an den Wert "1" absenkbar ist. Vorzugsweise ist die Drehzahl des zweiten Abgasturboladers 15 dann bereits so hoch, dass letzterer den gewünschten Ladedruck allein erreicht.

Ein Vorkatalysator 22 ist stromaufwärts, vorzugsweise aber, wie in dem in Fig. 1 gezeigten Ausführungsbeispiel verdeutlicht, stromabwärts des ersten Abgasturboladers 14 angeordnet. Der Vorkatalysator 22 ist mit zumindest einer stromaufwärts des Vorkatalysators 22 vorgesehenen Lambdasonde 23 regelbar. Wie in Fig. 1 gezeigt, ist vorteilhafterweise eine weitere Lambdasonde 24 stromabwärts des Vorkatalysators 22 und stromaufwärts eines nachfolgenden Hauptkatalysators 25 angeordnet.

Wie ferner in Fig. 1 gezeigt, umgeht die wenigstens eine Bypassleitung 20 des ersten Abgasturboladers 14 auch den Vorkatalysator 22.

Die beiden Abgasturbolader 14, 15 können gleich groß dimensioniert sein. Gemäß einer besonders bevorzugten Ausführungsform der Erfindung ist aber der erste Abgasturbolader 14 deutlich kleiner als der zweite Abgasturbolader 15 ausgelegt.

Die Abgasturbolader 14, 15 haben jeweils eine Turbine 26, 27 sowie jeweils einen Verdichter 30, 31. Die beiden Verdichter 30, 31 sind, wie in Fig. 1 gezeigt, in Reihe geschaltet. Gemäß einer besonders bevorzugten Ausführungsform der Erfindung sind die Turbinen jeweils eine so genannte Mixed-Flow-Turbine oder eine so genannte Twin-Scroll-Turbine für den ersten Abgasturbolader 14 oder Turbinen mit variabler Turbinengeometrie, wobei auch Kombinationen der vorgenannten Turbinen für den ersten bzw. für den zweiten Abgasturbolader möglich sind.

Die Verdichter 30, 31 der Abgasturbolader 14, 15 fördern die Luft in Richtung der Pfeile A über einen gemeinsamen, stromabwärts des Verdichters 30 des ersten Abgasturboladers 14 angeordneten Ladeluftkühler 32 in das gemeinsame Saugrohr 7. Wie bei der in Fig. 1 gezeigten Ausführungsform verdeutlicht, ist ein weiterer Ladeluftkühler 33 zwischen den Verdichter 31 des zweiten Abgasturboladers 15 und den Verdichter 30 des ersten Abgasturboladers 14 geschaltet.

Gemäß einer anderen Ausführungsform der Erfindung weist der Vorlauf 17 des zweiten Abgasturboladers 15 zwei nicht näher gezeigte Abgasführungen mit vorzugsweise weitgehender Flutentrennung auf, so dass das aus der zweiten Abgasleitung 13 zum zweiten Abgasturbolader 15 strömende Abgas weitgehend unbehindert von dem vom Gasausgang 16 des ersten Abgasturboladers 14 weg zum zweiten Abgasturbolader 15 strömenden Abgas in die Turbine 27 des zweiten Abgasturboladers 15 gelangen kann.

Wie in Fig. 1 ferner verdeutlicht, umgeht die Bypassleitung 21 den zweiten Abgasturbolader 15, nicht jedoch den Hauptkatalysator 25. Ferner ist eine zusätzliche Lambdasonde 34 stromabwärts des Hauptkatalysators 25 vorgesehen.

Die Betätigung der zumindest zwei Auslassventile 10, 12 jedes Zylinders 2 bis 5 ist zweistufig schaltbar ausgeführt. Dabei ist gemäß einer besonders bevorzugten Ausführungsform der Erfindung die Betätigung des wenigstens einen der Auslassventile, das ist in der gezeigten Ausführungsform jeweils das erste Auslassventil 10, jeweils zwischen einem Vollhub und einer gegenüber dem Vollhub in der Steuerzeit und optional dem Hub reduzierten Ventilerhebungskurve schaltbar. Außerdem ist die Betätigung des wenigstens einen weiteren der Auslassventile, das ist im gezeigten Ausführungsbeispiel jeweils das zweite Auslassventil 12, jeweils zwischen einer vollständigen Abschaltung und einem Vollhub schaltbar.

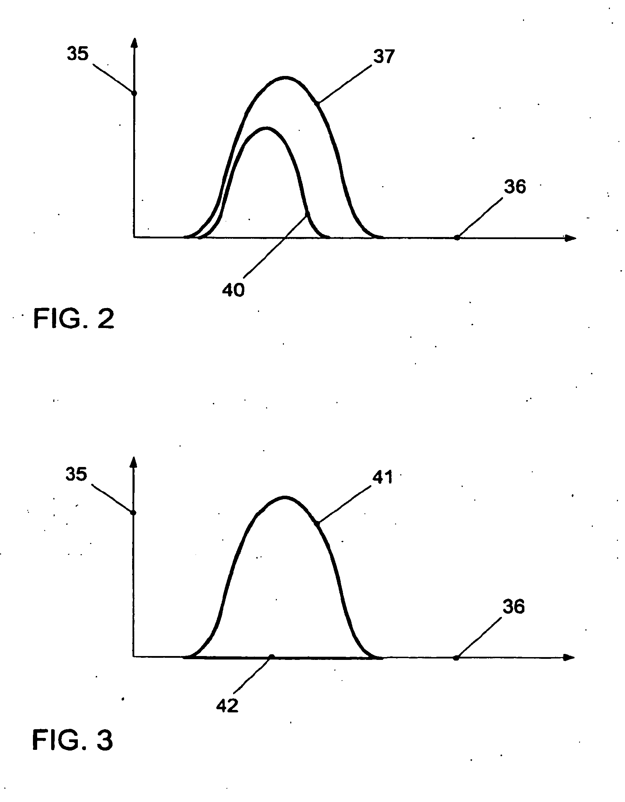

Dazu ist in Fig. 2 der Hub 35 auf der Ordinate und der Kurbelwinkel 36 auf der Abszisse für das erste Auslassventil 10 aufgetragen. Daraus ergibt sich für das erste Auslassventil 10 eine dem Vollhub zugeordnete, erste Ventilerhebungskurve 37 und eine gegenüber dem Vollhub in der Steuerzeit und dem Hub reduzierte, zweite Ventilerhebungskurve 40, wodurch die unterschiedlichen Schaltstellungen des ersten Auslassventils 10 verdeutlicht sind.

In Fig. 3 sind die unterschiedlichen Schaltstellungen der jeweils zweiten Auslassventile 12 dargestellt. Auch in diesem Schaubild ist der Hub 35 auf der Ordinate und der Kurbelwinkel 36 auf der Abszisse aufgetragen. Wie Fig. 3 zu entnehmen ist, ergibt sich für die Schaltstellungen des zweiten Auslassventils 12 eine dem Vollhub entsprechende Ventilerhebungskurve 41 und eine vollständige Abschaltung 42, bei der das zweite Auslassventil jeweils keinerlei Hub ausführt.

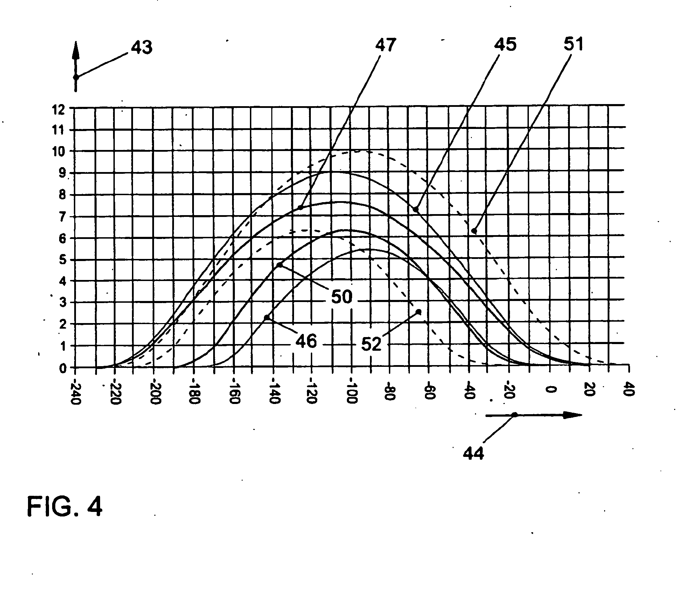

Genauer sind mögliche Ventilhübe und Steuerzeiten des jeweils ersten Auslassventils 10 in Fig. 4 gezeigt. Der Ventilhub 43 ist in Millimetern auf der Ordinate und der Kurbelwinkel 44 in ° auf der Abszisse aufgetragen. Für den Vollhub ergibt sich Steuerkurve 45, für den Teilhub Steuerkurve 46. In Fig. 4 sind zwei weitere Varianten eingezeichnet; so ergibt sich für eine Vollhub-"Variante 1" Steuerkurve 47, für eine Teilhub-"Variante 1" Steuerkurve 50; für eine Vollhub-"Variante 2" ergibt sich Steuerkurve 51 und für eine Teilhub-"Variante 2" Steuerkurve 52.

Der Zeitpunkt "Erstes Auslassventil öffnet" liegt bei einem Ventilhub von 1 mm bevorzugt bei >200/>170/>150° Kurbelwinkel vor dem Ladungswechsel-Oberer Totpunkt. Die Vollhübe von erstem und zweitem Auslassventil 10, 12 sind jeweils dabei idealerweise identisch in Hub und Steuerzeit.

Die Lambdasonden 23, 24, 34 können so genannte Sprung- oder Breitbandsonden sein.

Der Vorkatalysator 22 weist ein Volumen <1,0/0,8/0,6/0,5/0,4/0,35/0,3/0,25/0,2/0,15/0,1 Liter pro Liter Motorhubraum auf. Als Träger kann vorzugsweise ein Metallträger oder alternativ dazu ein Keramikträger zum Einsatz kommen, wobei beide Ausführungsformen bevorzugt zur Gegendruckminderung Kanalgeometrien aufweisen, die keine konstruktiv bedingten Querschnittsänderungen über die Lauflänge haben. Die Zellzahl des Vorkatalysators liegt bevorzugt bei <700/550/450/360 cpsi (cells per square inch), die Folienstärke beträgt vorzugsweise <70/55/45 µm bei Metallkatalysatoren bzw. <4/3,5/2,7 mil bei Keramikkatalysatoren.

Der Edelmetallgehalt kann aufgrund der günstigen, nämlich heißen Einbaulage auf <80/60/40/20/10/5/1 g/ft³ unter Einhaltung der Abgasgrenzwerte EU IV über die Fahrzeuglebensdauer reduziert werden. Vorteilhafterweise weist der Vorkatalysator neben einer so genannten Washcoatbeladung keine Edelmetallbeladung auf. Die so genannte Washcoatbeladung stellt eine Aluminium- oder Titanoxidbeschichtung auf einem Träger dar. Dadurch bildet sich letztlich eine poröse, aktive Oberfläche ähnlich derjenigen bei Aktivkohle.

Der Hauptkatalysator 25, weicher stromabwärts des zweiten Abgasturboladers 15 angeordnet ist, weist ein Volumen >0,4/0,5/0,6/0,8/1,0/1,5/2,0 Liter, aber <2,0/1,5/1,4/1,2/1,0/0,8 Liter pro Liter Motorhubraum auf. Als Träger kann bevorzugt ein Metallträger oder alternativ dazu ein Keramikträger zum Einsatz kommen, wobei insbesondere der Metallträger-Katalysator zur Optimierung des Wärme- und Stoffübergangs Kanalgeometrien aufweisen kann, die konstruktiv bedingte Querschnittsänderungen über die Lauflänge aufweisen, so zum Beispiel Folienlochung, -schlitzung, -verprägung. Die Zellzahl liegt bevorzugt bei >250/350/480/550 jedoch <700/950 cpsi. Die Folienstärke liegt vorzugsweise bei <90/70/55/45 µm bei Metallkatalysatoren bzw. <5/3,5/2,7 mil bei Keramikkatalysatoren. Der Edelmetallgehalt kann aufgrund der Konvertierungsleistung des Vorkatalysators trotz der "kalten" Einbaulage auf <80/60/40/20/10 g/ft³ unter Einhaltung der Abgasgrenzwerte EU IV über die Fahrzeuglebensdauer reduziert werden.

Der bzw. die Ladeluftkühler 32, 33 können als Luft-Luft- oder als Luft-Wasser-Kühler ausgelegt sein. Bei zwei Ladeluftkühlern können auch beide Bauformen zum Einsatz kommen. Bei zwei wassergekühlten Ladeluftkühlern kann ein gemeinsamer Wasserkreislauf vorgesehen sein. Es ist auch möglich, zwei getrennte Wasserkreisläufe vorzusehen.

Gemäß Fig. 1 ist die Abgasleitung 11 im Bereich des Gasausgangs 16 stromabwärts des Vorkatalysators 22 nach der Turbine 26 des ersten Abgasturboladers 14 direkt mit der Abgasleitung 13 der zweiten Auslassventile 12 verbunden. Daher stellt sich in diesem Bereich etwa der gleiche Druck ein. Dieser ist durch die Charakteristik der Turbine 27 des zweiten Abgasturboladers 15 und den Gegendruck der Abgasanlage festgelegt. Wenn die Drehzahl des zweiten Abgasturboladers 15 bereits so hoch ist, dass der Verdichter 31 dieses Abgasturboladers den gewünschten Ladedruck allein erreicht, wird von der Turbine 26 des ersten Abgasturboladers 14 kaum noch Antriebsleistung auf den Verdichter 30 des ersten Abgasturboladers geleitet.

Gemäß einer weiteren, nicht näher gezeigten Ausführungsform der Erfindung kann der Verdichter 30 des ersten Abgasturboladers mit einer Bypassleitung versehen sein, um den Ladeluftstrom nicht unnötig zu drosseln. Sofern für die Bypassleitung 20 des ersten Abgasturboladers 14, welche Bypassleitung auch Wastegateleitung genannt wird, konstruktiv kein großer Querschnitt möglich ist, können alternativ dazu auch zwei oder mehr Wastegateleitungen mit kleinerem Querschnitt vorgesehen sein.

Das stationäre Drehmoment des ersten Abgasturboladers 14 soll so früh wie möglich, d.h. bei Drehzahlen n<<2000 1/min, anliegen.

Nachfolgend werden einzelne Betriebsphasen der erfindungsgemäßen Brennkraftmaschine näher erläutert.

Im leerlaufnahen Bereich oder bei geringen Abgasmassenströmen (erste Phase) werden zunächst die zweiten Auslassventile 12 sowie die Bypassleitung 20 des ersten Abgasturboladers 14 geschlossen. Das Abgas strömt daher vollständig zunächst durch die Turbine 26 des ersten Abgasturboladers 14 und anschließend jedoch ohne große Energieabgabe durch die Turbine 27 des zweiten Abgasturboladers 15. Der zweite Abgasturbolader 15 läuft daher mit geringer Drehzahl mit. Der erste Abgasturbolader 14 beschleunigt schon bei geringem Abgasangebot auf hohe Drehzahlen, so dass bereits bei geringen Motordrehzahlen oder Abgasmassenströmen sehr hohe Ladedrücke bzw. Drehmomente erreicht werden können.

Da das gesamte Abgas über die Turbine 26 des ersten Abgasturboladers 14 geleitet wird, erreicht der Vorkatalysator 22 schnell die zur Umsetzung erforderliche Betriebstemperatur. Nur bei in dieser Phase unüblichen, den ersten Abgasturbolader 14 gefährdenden Betriebszuständen, wie zum Beispiel Volllast bei hohen Drehzahlen, kann eine zumindest teilweise Öffnung der Bypassleitung 20 zumindest temporär vorgesehen sein. Vorteilhafterweise werden die ersten Auslassventile 10 auf reduzierte Steuerzeiten eingestellt, um maximalen Ladedruck am ersten Abgasturbolader 14 zu erzielen.

Bei weiterer Steigerung der Motordrehzahl oder des Abgasmassenstroms würde bei geschlossenen zweiten Auslassventilen 12 und gleichzeitig geschlossener Bypassleitung 20 das Zieldrehmoment oder die maximale Drehzahl des ersten Abgasturboladers 14 überschritten. In dieser zweiten Phase wird nun zur Drehmoment- oder Drehzahlbegrenzung des ersten Abgasturboladers 14 zunächst die Bypassleitung 20 sukzessive geöffnet. Dazu kann ein feinstufiges oder ein stufenloses Ventil dienen. Der Abgasmassenstrom teilt sich nun abhängig von der Stellung des Ventils in der Bypassleitung 20 des ersten Abgasturboladers und der ersten Auslassventile 10 auf die beiden Turbinen 26, 27 auf. Mit steigender Drehzahl nimmt die Abgasenthalpie zu, so dass der zweite Abgasturbolader 15 zunehmend am Ladedruckaufbau beteiligt ist. Wenn die Bypassleitung 20, also das Wastgate, des ersten Abgasturboladers 14 vollständig geöffnet ist, ist das Druckverhältnis über der Turbine 26 so gering, dass sich ein Verdichterdruckverhältnis am ersten Abgasturbolader 14 nahe dem Wert "1" einstellt. Die zweiten Auslassventile 12 können nun auf Vollhub geöffnet werden. Dadurch stellt sich am ersten Abgasturbolader 14 zwangsweise ein Turbinendruckverhältnis von "1" ein. Da der Vorkatalysator 22 jetzt nur noch mit einem geringem Abgasmassenstrom beaufschlagt wird, kann die Gemischanfettung zwecks Bauteilschutz signifikant reduziert werden. Bei einer erfindungsgemäßen Brennkraftmaschine nach dem Otto-Prinzip kann hierbei mit einer maximalen Leistung von > 70 kW/Liter Hubraum und einem maximalen Moment von > 140 Nm/Liter Hubraum in zumindest 70/80/90/95/99 % des Motorkennfeldes bei > 2/3 Nenndrehzahl und > 2/3 Last mit einer Lambdasollvorgabe > 0,98/0,99/0,995 gefahren werden.

Die zweite Phase endet, wenn die zweiten Auslassventile 12 auf Vollhub umgeschaltet sind und das Wastegate, nämlich die Bypassleitung 20 des ersten Abgasturboladers 14, voll geöffnet ist.

In der dritten Phase ist die Bypassleitung 20 des ersten Abgasturboladers 14 voll geöffnet, beide Auslassventile 10, 11 sind auf Vollhub geschaltet. Der erste Abgasturbolader 14 wird nur mit einem geringen Abgasteilstrom beaufschlagt. Zur Ladedruckregelung wird bei weiterer Steigerung des Abgasmassenstroms die Bypassleitung 21 des zweiten Abgasturboladers 15 geöffnet.

Die Vorteile der erfindungsgemäßen Brennkraftmaschine sind zu sehen in:
- einem guten Ansprechverhalten und hohem stationärem Drehmoment bereits im leerlaufnahen Bereich insbesondere bei Motoren mit vier Zylindern;
- der Tatsache, dass keine Abgasklappen vorzusehen sind;
- einem Erreichen sehr hoher Literleistungen bis mehr als 100 kW/l bei entsprechender Dimensionierung des zweiten Abgasturboladers;
- einem frühen Anspringen der Abgasreinigung aufgrund der motornahen Anordnung des Vorkatalysators.

Aus Gründen der Unterbringung und möglichst kurzer Wege zwischen den einzelnen Komponenten der Abgasanlage, d.h. aus so genannten "Packagegründen", wird die Erfindung vorteilhaft an Motoren mit gerader Zylinderzahl und einem Zylinderkopf, also an Motoren R4, R6, R8 sowie VR4, VR6 und VR8 eingesetzt. Bei V-Motoren oder doppelter VR-Anordnung, also an den Volkswagen-W-Motoren, gelten diese Aussagen sinngemäß für zwei getrennte Bänke, mit dann insgesamt 4 oder 8 Abgasturboladern. Das sind die V8-, W8-, V16-, W16-Motoren.

Bei der erfindungsgemäßen Anordnung können Betriebszustände auftreten, in denen nach dem Öffnen der Auslassventile 12 aufgrund der Druckverhältnisse in der Abgasanlage relativ hohe Restgasgehalte und aufgrund der Ventilsteuerzeiten eine erhöhte Ladungswechselarbeit vorliegt. Zur Umgehung dieser eventuell auftretenden Probleme kann der Gasausgang 16 im Zuge der Bypassleitung 21 eine nicht gezeigte, stufenlos regelbare oder zweistufig steuerbare Klappe aufweisen. Insbesondere bei einer relativ motorfernen Anordnung des Hauptkatalysators 25 > 800/1000/1300/1600 mm hinter den Auslassventilen liegen vergleichsweise geringe Abgastemperaturen vor, so dass eine solche Klappentechnik problemfrei einsetzbar ist. Mit einer derart ausgeführten Abgasanlage sind Brennkraftmaschinenleistungen von > 80 kW/85 kW/90 kW pro Liter Hubraum erreichbar.

Damit ist eine Brennkraftmaschine geschaffen, bei der die Abgasturboaufladung deutlich verbessert ist.

## Patentansprüche

1. Brennkraftmaschine mit Abgasturboaufladung,
die pro Zylinder (2 bis 5) zumindest zwei Auslassventile (10, 12) aufweist,
wobei wenigstens eines (10) dieser Auslassventile (10, 12) jeweils ausschließlich mit einem ersten Abgasturbolader (14) und wenigstens ein weiteres (12) dieser Auslassventile (10, 12) jeweils ausschließlich mit einem zweiten Abgasturbolader (15) verbunden ist,
der Gasausgang (16) des ersten Abgasturboladers (14) an den Vorlauf (17) des zweiten Abgasturboladers (15) angeschlossen ist und
zumindest der erste Abgasturbolader (14) wenigstens eine Bypassleitung (20) aufweist,
**dadurch gekennzeichnet,**
**dass** die zumindest zwei Auslassventile (10, 12) unabhängig voneinander steuerbar ausgebildet sind,
wobei ein Vorkatalysator (22) stromaufwärts, vorzugsweise aber stromabwärts des ersten Abgasturboladers (14) angeordnet und mit zumindest einer stromaufwärts des Vorkatalysators (22) vorgesehenen Lambdasonde (23) regelbar ist, wobei vorzugsweise eine weitere Lambdasonde (24) stromabwärts des Vorkatalysators (22) und stromaufwärts eines nachfolgenden Hauptkatalysators (25) angeordnet ist, und
wobei die wenigstens eine Bypassleitung (20) des ersten Abgasturboladers (14) auch den Vorkatalysator (22) umgeht.

2. Brennkraftmaschine nach Anspruch 1, **dadurch gekennzeichnet, dass** die wenigstens eine Bypassleitung (20) des ersten Abgasturboladers (14) derart dimensioniert ist, dass das Turbinendruckverhältnis am ersten Abgasturbolader (14) bis nahe an den Wert "1" absenkbar ist, wobei vorzugsweise die Drehzahl des zweiten Abgasturboladers (15) dann bereits so hoch ist, dass letzterer den gewünschten Ladedruck allein erreicht.

3. Brennkraftmaschine nach einem der vorhergehenden Ansprüche, **dadurch gekennzeichnet, dass** die Betätigung der zumindest zwei Auslassventile (10, 12) zweistufig schaltbar ausgeführt ist, wobei vorzugsweise die Betätigung des wenigstens einen (10) der Auslassventile (10, 12) jeweils zwischen einem Vollhub und einer gegenüber dem Vollhub in der Steuerzeit und optional dem Hub reduzierten Ventilerhebungskurve und die Betätigung des wenigstens einen weiteren (12) der Auslassventile (10, 12) jeweils zwischen einer vollständigen Abschaltung und einem Vollhub schaltbar ist.

4. Brennkraftmaschine nach einem der vorhergehenden Ansprüche, **dadurch gekennzeichnet, dass** die beiden Abgasturbolader (14, 15) gleich groß dimensioniert sind, vorzugsweise aber der erste Abgasturbolader (14) deutlich kleiner als der zweite Abgasturbolader (15) ausgelegt ist.

5. Brennkraftmaschine nach einem der vorhergehenden Ansprüche, **dadurch gekennzeichnet, dass** die Abgasturbolader (14, 15) jeweils eine Turbine (26, 27), vorzugsweise jeweils eine so genannte Mixed-Flow-Turbine oder eine so genannte Twin-Scroll-Turbine für den ersten Abgasturbolader (14) oder Turbinen mit variabler Turbinengeometrie, auch in Kombination miteinander, und jeweils einen Verdichter (30, 31) aufweisen und die beiden Verdichter (30, 31) in Reihe geschaltet sind.

6. Brennkraftmaschine nach Anspruch 5, **dadurch gekennzeichnet, dass** die Verdichter (30, 31) der Abgasturbolader (14, 15) die Luft über einen gemeinsamen, stromabwärts des Verdichters (30) des ersten Abgasturboladers (14) angeordneten Ladeluftkühler (32) in ein gemeinsames Saugrohr (7) fördern.

7. Brennkraftmaschine nach Anspruch 6, **dadurch gekennzeichnet, dass** ein weiterer Ladeluftkühler (33) zwischen den Verdichter (31) des zweiten und den Verdichter (30) des ersten Abgasturboladers (15, 14) geschaltet ist.

8. Brennkraftmaschine nach einem der vorhergehenden Ansprüche, **dadurch gekennzeichnet, dass** der Vorlauf (17) des zweiten Abgasturboladers (15) zwei Abgasführungen mit vorzugsweise weitgehender Flutentrennung aufweist.

## Claims

1. Internal combustion engine with exhaust-gas turbocharging,
which internal combustion engine has at least two outlet valves (10, 12) per cylinder (2 to 5), wherein at least one (10) of said outlet valves (10, 12) is connected in each case only to a first exhaust-gas turbocharger (14) and at least one further one (12) of said outlet valves (10, 12) is connected in each case only to a second exhaust-gas turbocharger (15),
the gas outlet (16) of the first exhaust-gas turbocharger (14) is connected to the feed line (17) of the second exhaust-gas turbocharger (15), and
at least the first exhaust-gas turbocharger (14) has at least one bypass line (20),
**characterized in that** the at least two outlet valves (10, 12) are formed such that they can be controlled independently of one another,
wherein a primary catalytic converter (22) is arranged upstream, but preferably downstream, of the first exhaust-gas turbocharger (14) and can be controlled by means of at least one lambda probe (23) provided upstream of the primary catalytic converter (22), wherein a further lambda probe (24) is preferably arranged downstream of the primary catalytic converter (22) and upstream of a following main catalytic converter (25), and wherein the at least one bypass line (20) of the first exhaust-gas turbocharger (14) also bypasses the primary catalytic converter (22).

2. Internal combustion engine according to Claim 1, **characterized in that** the at least one bypass line (20) of the first exhaust-gas turbocharger (14) is dimensioned such that the turbine pressure ratio across the first exhaust-gas turbocharger (14) can be lowered to close to the value "1", wherein it is preferable for the rotational speed of the second exhaust-gas turbocharger (15) to then be already so high that the latter alone generates the desired charge pressure.

3. Internal combustion engine according to one of the preceding claims, **characterized in that** the actuation of the at least two outlet valves (10, 12) is configured so as to be switchable in two-stage fashion, wherein it is preferably the case that the actuation of the at least one (10) of the outlet valves (10, 12) can be switched in each case between a full lift and a valve lift curve which is reduced in relation to the full lift in terms of control time and optionally terms of lift and the actuation of the at least one further one (12) of the outlet valves (10, 12) can be switched in each case between a complete deactivation and a full lift.

4. Internal combustion engine according to one of the preceding claims, **characterized in that** the two exhaust-gas turbochargers (14, 15) are of equal dimensions, but preferably, the first exhaust-gas turbocharger (14) is designed to be considerably smaller than the second exhaust-gas turbocharger (15).

5. Internal combustion engine according to one of the preceding claims, **characterized in that** the exhaust-gas turbochargers (14, 15) have in each case one turbine (26, 27), preferably in each case one so-called mixed-flow turbine or one so-called twin-scroll turbine for the first exhaust-gas turbocharger (14) or turbines with variable turbine geometry, also in combination with one another, and in each case one compressor (30, 31), and the two compressors (30, 31) are connected in series.

6. Internal combustion engine according to Claim 5, **characterized in that** the compressors (30, 31) of the exhaust-gas turbochargers (14, 15) deliver the air via a common charge-air cooler (32), which is arranged downstream of the compressor (30) of the first exhaust-gas turbocharger (14), into a common intake pipe (7).

7. Internal combustion engine according to Claim 6, **characterized in that** a further charge-air cooler (33) is connected between the compressor (31) of the second and the compressor (30) of the first exhaust-gas turbocharger (15, 14).

8. Internal combustion engine according to one of the preceding claims, **characterized in that** the feed line (17) of the second exhaust-gas turbocharger (15) has two exhaust-gas guides with preferably substantial channel separation.

## Revendications

1. Moteur à combustion interne à turbocompresseur à gaz d'échappement,
qui présente, pour chaque cylindre (2 à 5), au moins deux soupapes d'échappement (10, 12),
au moins l'une (10) de ces soupapes d'échappement (10, 12) étant à chaque fois exclusivement connectée à un premier turbocompresseur à gaz d'échappement (14) et au moins une autre (12) de ces soupapes d'échappement (10, 12) étant à chaque fois exclusivement connectée à un deuxième turbocompresseur à gaz d'échappement (15),
la sortie de gaz (16) du premier turbocompresseur à gaz d'échappement (14) étant raccordée à l'entrée (17) du deuxième turbocompresseur à gaz d'échappement (15) et
au moins le premier turbocompresseur à gaz d'échappement (14) présentant au moins une conduite de dérivation (20),
**caractérisé en ce que**
les au moins deux soupapes d'échappement (10, 12) sont réalisées de manière à pouvoir être commandées indépendamment l'une de l'autre,
un pré-catalyseur (22) étant disposé en amont, mais de préférence en aval du premier turbocompresseur à gaz d'échappement (14), et pouvant être réglé avec au moins une sonde lambda (23) prévue en amont du pré-catalyseur (22), une autre sonde lambda (24) étant de préférence disposée en aval du pré-catalyseur (22) et en amont d'un catalyseur principal suivant (25), et l'au moins une conduite de dérivation (20) du premier turbocompresseur à gaz d'échappement (14) contournant aussi le pré-catalyseur (22).

2. Moteur à combustion interne selon la revendication 1, **caractérisé en ce que** l'au moins une conduite de dérivation (20) du premier turbocompresseur à gaz d'échappement (14) est dimensionnée de telle sorte que le rapport de pression de turbine au niveau du premier turbocompresseur à gaz d'échappement (14) puisse être abaissé jusqu'à pratiquement la valeur "1", la vitesse de rotation du deuxième turbocompresseur à gaz d'échappement (15) étant de préférence déjà si élevée que ce dernier atteint seul la pression de charge souhaitée.

3. Moteur à combustion interne selon l'une quelconque des revendications précédentes, **caractérisé en ce que** l'actionnement des au moins deux soupapes d'échappement (10, 12) est réalisé de manière commutable à deux étages, de préférence l'actionnement de l'au moins une (10) des soupapes d'échappement (10, 12) pouvant être commuté à chaque fois entre une course complète et une courbe de levage de soupape réduite par rapport à la course complète dans le temps de commande et en option par rapport à la course, et l'actionnement de l'au moins une autre (12) des soupapes d'échappement (10, 12) pouvant être commuté à chaque fois entre une coupure complète et une course complète.

4. Moteur à combustion interne selon l'une quelconque des revendications précédentes, **caractérisé en ce que** les deux turbocompresseurs à gaz d'échappement (14, 15) sont dimensionnés avec la même taille, mais de préférence le premier turbocompresseur à gaz d'échappement (14) est nettement plus petit que le deuxième turbocompresseur à gaz d'échappement (15).

5. Moteur à combustion interne selon l'une quelconque des revendications précédentes, **caractérisé en ce que** les turbocompresseurs à gaz d'échappement (14, 15) présentent à chaque fois une turbine (26, 27), de préférence à chaque fois une turbine dite à flux mixte, ou une turbine dite à double impulsion pour le premier turbocompresseur à gaz d'échappement (14) ou des turbines de géométrie variable, également en combinaison les unes avec les autres, et à chaque fois un compresseur (30, 31), et les deux compresseurs (30, 31) sont montés en série.

6. Moteur à combustion interne selon la revendication 5, **caractérisé en ce que** les compresseurs (30, 31) des turbocompresseurs à gaz d'échappement (14, 15) refoulent l'air dans un tube d'aspiration commun (7) par le biais d'un refroidisseur d'air de charge (32) commun disposé en aval du compresseur (30) du premier turbocompresseur à gaz d'échappement (14).

7. Moteur à combustion interne selon la revendication 6, **caractérisé en ce qu'**un refroidisseur d'air de charge (33) supplémentaire est monté entre le compresseur (31) du deuxième turbocompresseur à gaz d'échappement (15) et le compresseur (30) du premier turbocompresseur à gaz d'échappement (14).

8. Moteur à combustion interne selon l'une quelconque des revendications précédentes, **caractérisé en ce que** l'entrée (17) du deuxième turbocompresseur à gaz d'échappement (15) présente deux conduites de gaz d'échappement avec une séparation de flux de préférence substantielle.
